(19) Europäisches Patentamt
European Patent Office
Office européen des brevets

(11) Publication number: 0 197 465 A2

(12) # EUROPEAN PATENT APPLICATION

(21) Application number: 86104314.9

(22) Date of filing: 27.03.86

(51) Int. Cl.[4]: H 01 M 4/58
H 01 M 10/40, G 02 F 1/17
H 01 M 4/60, C 01 C 3/14

(30) Priority: 29.03.85 JP 63317/85
13.09.85 JP 201665/85

(43) Date of publication of application:
15.10.86 Bulletin 86/42

(84) Designated Contracting States:
AT BE CH DE FR GB IT LI LU NL SE

(71) Applicant: SAGAMI CHEMICAL RESEARCH CENTER
4-5, Marunouchi 1-chome
Chiyoda-ku, Tokyo, 100(JP)

(72) Inventor: Honda, Kenji
1-9-2 Minamidai
Sagamihara-shi Kanagawa(JP)

(72) Inventor: Kuwano, Atsushi
4-4-1 Nishionuma,
Sagamihara-shi Kanagawa(JP)

(72) Inventor: Matsui, Kiyoshi
4-6-5 Misono
Sagamihara-shi Kanagawa(JP)

(72) Inventor: Ochiai, Junko
4-11 Hashimoto
Sagamihara-shi Kanagawa(JP)

(72) Inventor: Miyama, Hajime
1769-1 Fukazawa-cho
Nagaoka-shi Niigata(JP)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) **Solid electrochemically reactive materials and thin-film devices using the same.**

(57) A solid electrochemically reactive material is disclosed, which contains polymeric metal complex consisting of complex cation represented by a general formula of $M_A{}^X(L_A{}^a)_\ell$ and complex anion represented by a general formula of $M_B{}^Y(L_B{}^b)_m\ (L_C{}^c)_n$ wherein $M_A{}^X$ and $M_B{}^X$ are transition metal ions of X valent and Y valent, respectively, $L_A{}^a$ is a ligand having a valent positive charge, $L_B{}^b$ and $L_C{}^c$ are ligands having b valent and c valent negative charge, respectively, X, Y, a, $\ell$ and n are positive integers including O, b is a negative integer, c is a negative integer including 0 and m is a positive integer. The electrochemically reactive thin film is used as a dielectric membrane for a secondary battery and for an electrochromic display device.



Croydon Printing Company Ltd.

# SOLID ELECTROCHEMICALLY REACTIVE MATERIALS AND THIN-FILM DEVICES USING THE SAME

The present invention relates to a solid electrochemically reactive material containing polymeric metal complex, especially such a material containing polynuclear metal complex, and a solid-state thin-film device using the same.

A solid-state thin-film device is useful for development of microelectronics such as batteries and display devices. In the case of batteries, a miniature primary battery has been already manufactured as a so-called button-type cell. On the other hand, lead battery and nickel-cadmium battery are still used as a major product of secondary battery, which are, as well known, inconvenient to operate because of a big and heavy body and strong acidic or alkaline electrolyte.

To solve this problem, a solid-state thin-film battery is being developed using a foil of lithium metal as cathodic active substance with anodic active substance like inorganic substance such as $TiS_2$ etc., or organic polymeric compounds such as polyacetylene, polyaniline or polypyrrole. A solid electrolyte should be used to prepare a solid-state cell. A solid-state secondary battery can be prepared by successive overlaying of cathodic active substance, solid electrolyte and anodic active substance onto electrode substrate. There are still existing many problems in manufacturing a lithium battery. For example, it is necessary to protect the

battery from moisture in the production owing to high reactivity of lithium metal with water, so that tedious operations are required. Furthermore, organic anodic active substance is rapidly deteriorated by oxidation. Thus, assembly of the battery is relatively complex.

Display devices may be divided into emission type and non-emission type. The emission type includes cathode ray tube (CRT), light emission diode (LED), plasma display device (PDP), electroluminescence device (ELD), etc. The non-emission type includes liquid crystal display device (LCD) and electrochromic display device (ECD). ECD utilizes reversible color change induced by oxidation and reduction of redox agents with electrochemical action.

Non-emission type display device generally possesses advantage that a flat panel with large surface area can be easily formed. In addition, ECD possesses many other advantages such as easiness to see, low driving voltage, memory property, wide operable temperature range, small optical angle dependency, relative easiness to multi-coloring. However, conventional ECD has such a defect of short lifetime.

ECD is largely divided into the one using inorganic substance as electrochromic substance (EC agent) and the other using organic substance as EC agent. At present, the development of the former is in advance to the latter because of the stability.

Either liquid electrolyte or solid electrolyte can be employed in composing of a total ECD device. A solid

electrolyte is, in general, more favorable than liquid one, because of non-leakage of electrolyte. A representative example of all solid type ECD has a composition of $WO_3/Ta_2O_5/IrO_x$. In preparing this type of device, some technical problems exist at mass production, which, in part, comes from the fact that each conponent should be over-layered by vacuum-evaporation or spattering.

Conventional ECD requires base electrodes because it is voltage-drive type. Therefore, characters or figures to be displayed are limited to the shape of the base electrodes. In other words, it is practically impossible to realize a high-density display. To overcome this, a driving method should be changed to other than voltage-drive. Photo-drive method can be considered as an alternative way. This method can be achieved using photoresponsive elecdtrodes, i.e., semiconductor electrodes as base electrode.

Photo-drive type ECE (PECD) was disclosed in the following literatures: (1) Honda et al., J. Electrochem. Soc., 127, 1582 - 1588, (1980); (2) Bard et al., ibid., 127, 333 - 338 (1980). In the literature 1, photo-induced display was conducted by forming a $PbO_2$ coating layer on electrode based on the photo-redox reaction according to the equation (1), using ZnO as semiconductor electrode.

$$Pb^{2+} + 2H_2O + 2P^{+} \xrightarrow{ZnO+h\nu} PbO_2 + 4H_{+} \quad \ldots (1)$$

In the literature 2, photo-induced display was conducted by electrodepositing viologen cation radical on

GaAs electrode based on the photo-redox reaction shown in equation (2), using p-type GaAs semiconductor electrode.

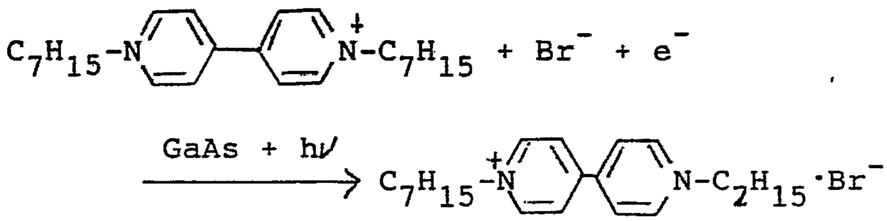


...(2)

However, all these examples employs the reactions in aqueous solution and thus are far from practical stage.

In another literature, Bard et al., reported that the reaction shown in equation (2) occurred by irradiating light to CdS fine particles-dispersed membrane containing viologen as absorbent in dipping the membrane in an aqueous tartaric acid solution (Bard et al., J. Am. Chem. Soc., 105, 7002 - 7003 (1983). This method, however, should also use liquid and thus similar problems as described above still remain unsolved for practical use.

An object of the present invention is to provide a solid electrochemically reactive material which enables to realize a solid type device having high stability and durability.

Another object is to provide a solid electrochemical device using thereof.

The solid electrochemically reactive material means the one formed by including a polymeric metal complex especially polynuclear metal complex into a solid polymer electrolyte.

The polynuclear metal complex is the complex formed from a complex cation represented by a general formula of $M_A^X(L_A^a)_\ell$ and a complex anion represented by a general formula of $M_B^Y(L_B^b)_m(L_C^c)_n$, wherein each of $M_A^X$ and $M_B^Y$ is a transition metal ion of X-valence and Y-valence, respectively, and $L_A^a$ represents a ligand having a neutral or a-valent positive charge, while each of $L_B^b$ and $L_C^c$ represents a ligand having b-valent negative charge and neutral or c-valent negative charge, respectively. Each of X, Y and m is a positive integer, each of a, $\ell$ and n is a positive integer including zero, b is a negative integer, and c is a negative integer including zero.

The solid electrochemically reactive material of the present invention can be obtained by complexation of a cation represented by general formula $M_A^X$ and a complex anion represented by the formula $M_B^Y(CN^-)_5L_C^c$ in solid polymer electrolyte such as cation exchanger, anion exchangter, or polyion complex, etc., where $M_A^X$, $M_B^Y$, $L_C^c$, X, Y and c are as defined above.

Commercial available ion exchangers can be used as the ion exchanger of the present invention. The ion exchanger may have a form of membrane, fiber, or particle. To use ion exchange membrane is advantageous for the production of solid membrane type devices. Examples of commercial ion exchange membrane include Neocepta (trademark), Selemion (trademark), Flemion (trademark), Aceplex (trademark), Nafion (trademark) etc. A cation exchange membrane is favorable from a viewpoint of ion conductivity, electrochemical inactivity, durability,

mechanical properties, etc. Especially, a fluorocarbon type cation exchange membrane such as Nafion or Elemion is more favorable. Besides them, a polystyrene type anion exchange fiber, e.g., Ionex (trademark) can be used as ion exchange fiber. Examples of particle type ion exchanger include strongly acidic cation exchange resins such as Amberlite (trademark)-IR type, Dowex (trademark)-50 type, etc. or strongly basic anion exchange resins such as Amberlite-IRA type, Dowex-1 type, Duolite (trademark)-A type, etc. Chelating ion exchange resin, e.g., Retardion (trademark) 11 can also be used.

In case that polynuclear metal complex to be included into solid polymer electrolyte is formed from a transition metal ion and a complex anion, there may be mentioned a divalent or trivalent transition metal ion as the metal ions of general formulae $M_A^X$ and $M_B^Y$. Especially, divalent or trivalent transition metal ion of VIII group such as $Fe^{2+}$, $Fe^{3+}$, $Ni^{2+}$, $Co^{2+}$, $Co^{3+}$, $Ru^{2+}$, $Ru^{3+}$, $Os^{2+}$, or $Os^{3+}$ is favorable. As the ligand of general formula $L_B^b$, there may be mentioned $CN^-$, dimercaptomaleic acid, pyromellitic acid, naphthazanin, etc. As the ligand of general formula $L_C^c$, there may be mentioned $CN^-$, $SO_3^-$, $AsO_2^-$, $NH_3$, $H_2O$, $H_2N\text{-}NH_2$ or CO. Examples of the complex anion represented by the general formula $M_B^Y(CN^-)_5L_C^c$ include $[Fe(CN)_6]^{3-}$, $[Fe(CN)_6]^{4-}$, $[Fe(CN)_5{\cdot}H_2O]^{2-}$, $[Fe(CN)_5{\cdot}CO]^{2-}$, or $[Ru(CN)_6]^{4-}$.

The methods for including polynuclear metal complex into solid polymer electrolyte is as follows:

In case that a cation exchanger is employed as the

solid polymer electrolyte, the cation exchanger is dipped into an aqueous solution containing a metal ion of formula $M_A^X$ supplying substance such as $FeCl_2$, $FeCl_3$, $RuCl_3$, or $CoCl_2$, whereby the metal ion of formula $M_A^X$ is included to the ion exchanger. Then, the ion exchanger containing the metal ion of formula $M_A^X$ is dipped into an aqueous solution containing a complex anion of formula $M_B^Y(CN^-)_5L_C^c$ supplying substance such as $K_3[Fe(CN)_6]$, $Cs_3[Fe(CN)_6]$, $K_4[Fe(CN)_6]$, $K_2[Fe(CN)_5 \cdot H_2O]$, $K_2[Fe(CN)_5 \cdot CO]$ or $K_4[Ru(CN)_6]$, whereby the resulting polynuclear metal complex can be favorably dispersed into the cation exchanger.

Any concentration of the aqueous solution containing metal ion of formula $M_A^X$ supplying substance and the aqueous solution containing complex anion of formula $M_B^Y(CN-)_5L_C^c$ supplying substance may be used. As reaction time is too long in case of too low concentraiton, the concentration from 0.5 mM to 100 mM is preferred.

In case that unreacted metal ion of formula $M_A^X$ exists in the ion exchanger after the formation of the polynuclear metal complex, the unreacted metal ion can be removed by dipping the ion exchanger into any concentration of an aqueous solution of KCl, RbCl, CsCl, $NH_4Cl$, etc., whereby the metal ion is exchanged with $K^+$, $Rb^+$, $Cs^+$, $NH_4^+$, etc.

In case that polymer electrolyte containing cationic group such as anion exchanger is employed as the polymer electrolyte, the polynuclear metal complex can be included into the anion exchanger in a reverse manner as the case of cation exchanger. Namely, a complex anion of formula

$M_B^Y(CN^-)_5L_C^c$ is firstly included into a polymer electrolyte, followed by the treatment with a metal ion of formula $M_A^X$.

The structure of thus formed polynuclear metal complex is considered to be the one that same kind or different kind of metal ions having different valencies are three-diimensionally connected by $CN^-$ ion, crosslinking ligand, as represetned by the formula of
$(Fe^{III})_4[Fe^{II}(CN)_6]_3$ (insoluble Prussian blue),
$(Fe^{III})_4[Ru^{II}(CN)_6]_3$ (ruthenium purple),
$(Fe^{III})_4[Os^{II}(CN)_6]_3$ (osumium purple),
$Fe^{II}[Fe^{III}(CN)_5 \cdot H_2O]$, $Fe^{II}[Fe^{III}(CN)_5 \cdot NH_3]$,
$Fe^{II}[Fe^{III}(CN)_5 \cdot CO]$ and analogous structure of them. However, the structure is not necessarily limited to the above neutral-valence structures and may be a negatively charged structure like $Co^{II}[Fe^{III}(CN)_6]^{1-}$ $Fe^{II}[Fe^{III}(CN)_6]^{1-}$, to which dissociating groups of the polymer electrolyte and/or ions involved in the polymer electrolyte combine to neutralize the charge to form $KFe^{II}[Fe^{III}(CN)_6]$ (soluble Prussian blue) or $KCo^{II}[Fe^{III}(CN)_6]$. As the monovalent cation to neutralize the charge of the polynuclear metal complex, there may be mentioned $Rb^+$, $Cs^+$ or $NH_4^+$ other than $K^+$. The monovalent cation is supplied from the metal ion supplying substance of formula $M_B^Y(CN)_5L^Z$ such as $K_3[Fe(CN)_6]$, $Cs_3[Fe(CN)_6]$, $K_4[Fe(CN)_6]$, $K_2[Fe(CN)_5 \cdot H_2O]$, $K_2[Fe(CN)_5 \cdot CO]$, or $K_4[Ru(CN)_6]$, or the substance used for removing unreacted metal ion such as KCl, RbCl, CsCl or $NH_4Cl$, etc.

Next, an electrochromic display device using the above-mentioned solid material of the present invention

is explained. The device comprises a composite polymer electrollyte containing the polynuclear metal complex and an opaque background material (hereinafter called backing material).

Methods for preparing the composite polymer electrolyte composed of the backing material and polymer electrolyte include several methods as shown below. Namely following methods can be exemplified according to the kind of polymer electrolyte and backing material, where two kinds of backing materials, i.e., (A) porous membrane and (B) colored particles can be used. In these methods, it is important to prevent leaching of polymer electrolyte out of the composite polymer electrolyte membrane in water:

(A-1) In case that a polymer electrolyte itself is insoluble to water and soluble to organic solvent, the polymer electrolyte may be coated onto a porous membrane and the membrane is dried.

(A-2) In case that a polymer electrolyte itself is water-soluble, the electrolyte is mixed with a polymer which is insoluble to water and soluble to organic solvent. The mixture is dissolved in organic solvent and the resulting solution is coated onto a porous membrane and then the membrane is dried.

(A-3) A water-soluble polymer electrolyte is mixed with a second water-soluble polymer having crosslinkable groups. Then, the solution of the resulting polymer composition is coated onto a porous membrane and the membrane is heated, irradiated by X-ray or treated with chemical reagent to cause

crosslinking.

(A-4) A solution of composition of a monomer having dissociating group and a crosslinking agent is coated onto a porous membrane and then the composition is polymerized and crosslinked.

(A-5) A composition of a monomer having a functional group capable to introduce dissociating group or convert into dissociating group and a crosslinking agent is dissolved in a solvent. After coating the solution onto a porous membrane, polymerization and crosslinking are conducted and then introduction of dissociating group or conversion to dissociating group is carried out.

(B-1) After dispersing colored particles into a solution of the same polymer electrolyte as described in (A-1), the dispersion is placed onto a base plate and solvent is evaporated.

(B-2) After dispersing colored particles into a solution of the same polymer electrolyte as described in (A-2), the dispersion is placed onto a base plate and solvent is evaporated.

(B-3) After dispersing colored particles into a solution of the same polymer composition as described in (A-3), the dispersion is placed onto a base plate and then heated, irradiated by X-ray or treated with chemical reagent to cause crosslinking.

(B-4) After dispersing colored particles into a solution of the same composition as described in (A-4), the dispersion is placed onto a base plate and then polymerized and

crosslinked.

(B-5) After dispersing colored particles into a solution of the same composition as described in (A-5), the dispersion is placed onto a base plate and then polymerized and crosslinked.

As the water-insoluble and organic solvent-soluble polymer electrolyte described in (A-1), there may be mentioned perfluoropolyethylene-type oligomeric Nafion (trademark) as commercial product, or, in general, polymers prepared by copolymerizing a monomer having dissociating group such as styrenesulfonic acid, 2-acrylamide-2-methylpropanesulfonic acid, acrylic acid, methacrylic acid, allylamine, N,N-dimethylaminopropylacrylamide, 4-vinylpyridine with a hydrophobic monomer such as styrene, methyl methacrylate, ethylene, propylene, etc. The water-insoluble polymer can be obtained by controlling the ratio of the monomer containing dissociating group to the hydrophobic monomer in the resulting copolymer. The desired type of polymer electrolyte which is other than above-mentioned vinyl polymers can be prepared by controlling the content of hydrophobic groups and dissociating groups.

As the water-soluble polymer electrolyte descrdibed in (A-2), there may be mentioned polystyrenesulfonic acid, polyacrylic acid, polyethylenesulfonic acid, polyphosphoric acid, polyvinylpyridine, polyvinylamine, polyethyleneimine, etc. Examples of the polymer insoluble to water and soluble to organic solvent include usual hydrophobic linear polymers such as polystyrene, polymethyl methacrylate, polyethylene,

polyvinyl chloride, polyacrylonitrile, or copolymer of acrylonitrile and vinyl chloride.

As the water-soluble polymer containing crosslinkable group described in (A-3), there may be mentioned polyvinyl alcohol, polyallylamine, polyacrylic acid, polyethyleneimine, poly(N-methylol)acrylamide, etc. Examples of the chemical reagents for the crosslinking reaction include glutaraldehyde, formaldehyde, hydrazine, cyanuric chloride, etc.

As the monomers having dissociating group described in (A-4), there may be mentioned styrenesulfonic acid, 2-acrylamide-2-methylpropanesulfonic acid, acrylic acid, methacrylic acid, allylamine, N,N-dimethylaminopropylacrylamide, 4-vinylpyridine, crosslinking agent, divinylbenzene, or methylenebisacrylamide, etc. can be employed. Besides them, any compound having two or more functional groups capable to polymerize in one molecule can be also applicable.

As the monomer capable to introduce a dissociating group described in (A-5), there may be mentioned such a monomer as styrene or 2,4-dimethylphenol having phenyl group capable to introduce sulfonate group, such a monomer as vinylpyridine or N,N-dimethylaminopropylacrylamide having tertiary amino group. As the monomer capable to introduce dissociating group, there may be mentioned a monomer having ester group such as butyl vinylsulfonate, methyl methacrylate, etc.

As the porous backing membrane, there may be mentioned commercially available porous membranes such as Fluoropore (trademark), Gore-tex (trademark) or Hypore (trademark).

Moreover, the desired membrane can be prepared according to the following method: A porous membrane can be prepared by coating a solution of water-insoluble polymer in organic solvent miscible with water such as dimethylformamide, dimethyl sulfoxide, tetrahydrofuran onto a base plate, and then dipping into water. A pore size of the resulting porous membrane may be in the range between 0.01 μm and 10 μm and favorably from 0.1 μm to 5 μm for the adhesion to the polynuclear metal complex and/or its formation rate in the composite polymer electrolyte.

In case that colored particles are employed as backing material, basically, any kind of particles with any color can be used. However, white pigment such as zinc white, lithopone (mixture of zinc sulfide and barium sulfate), titanium white, lead white, or fine powder of crosslinked polymer such as polymer latex is preferred, because a contrast is highest when white background is used.

Next, an example of preparation of an electrochromic display device of the present invention will be described. The device is prepared by attaching the composite polymer electrolyte membrane containing polynuclear metal complex (hereinafter, called polymer complex membrane) to electrode base plates. The attaching of the polymer complex membrane to the electrode plates may be conducted by coating an electrochemically inactive metal such as gold or platinum onto the both sides of the polymer complex membrane as semitransparent thin film which acts as the electrode plates. Otherwise, two transparent electrode plates such as Nesa

glasses or conducting transparent plastic films may be pressed to the polymer complex membrane.

The principle of thus obtained solid electrochromic display device will be briefly explained below. It has been confirmed by X-ray analysis and microscopic observation that the polymer complex membrane has a micro-inhomogeneous multilayered structure of EC agent/solid electrolyte/EC agent, where the polynuclear metal complex precipitates only at the outer parts of the composite polymer electrolyte. Therefore, in the solid device described above, the polynuclear metal complex is oxidized to a higher valence state on anode, while the same complex is reduced to a lower valence state on cathode. At that time, different color changes at both sides of the thin film device can be observed and reversible color change occurs as the complex is oxidized or reduced. Furthermore, as each EC agent at oxidation site and reduction site is completely separated by the opaque polymer electrolyte layer as described above, interference of color tone and back electron transfer between two EC layers at each side of the membrane can be prevented. Thus, memory of display is realized at the present display device.

Next, the application of the present invention to a PECD will be explained. The device comprises a semiconductor-containing electrochemically reactive material which contains a semiconductor, an electron donor, and an electron acceptor, where at least one of the electron donor and the electron acceptor is a polymeric metal complex.

Examples of the electron donor include the above-mentioned polynuclear metal complex such as insoluble Prussian blue (hereinafter denoted by PB), a soluble polymeric metal complex prepared by coordinating a lower valence state of transition metal ion such as iron (II), cobalt (II), nickel (II) or copper (I) to a polymer having a functional group capable to combine metal such as polyvinylpyridine, polyvinylimidazole, polyacrylic acid or polyvinylalcohol, a low molecular weight metal complex such as tris(basophenanthroline)-iron (II) complex, tris(2,2-bipyridine)-iron(II) complex, tris(phenanthroline)-cobalt(II) complex or ferrocene, a polyaromatic compound such as anthracene, acenaphthylene, carbazole or tetrathlafluvalene, reduced type quinones such as hydroquinone, pyrogalol or cathechol, organic acids such as tartaric acid, ethylenediaminetetraacetic acid or formic acid, alcohols such as methyl alcohol, ethyl alcohol, polyvinylalcohol or cellulose, amines such as triphenylamine, butylamine or triethanolamine, thiol compounds, and tetrahydrofuran.

As the electron acceptor, there may be mentioned a soluble polymeric metal complex prepared by coordinating a higher valence state of transition metal ion such as iron(III), cobalt(III), nickel(III) or copper(II) to a polymer having a functional group capable to combine metal, 4,4'-bipyridinium salt such as methyl viologen, heptyl viologen or benzyl viologen, quinone such as disodium 9,10-anthraquinone-2,6-disulfonate or sodium 9,10-anthraquinone-1-sulfonate, 1,3-didodecylalloxazine, vitamine K, benzylnicotineamide, flavine mononucleotide, or tetracyanoquinodimethane, other than

above-mentioned insoluble polymeric metal complex, e.g., PB.

The semiconductor for the present invention may be in amorphous fine particle or crystalline form. Fundamentally, every kind of a semiconductor can be used. The examples include elemental semiconductors such as Ge or Si, compound semiconductors of III-V group such as GaAs or InP, or compound semiconductors of II-VI group such as CdS or ZnO.

For solidification of the whole PECD, it is important to incorporate these components into a thin-film substrate. As the substrate, polymer materials or ceramics can be used. However, the former is favorable because of easiness to obtain a large surface, flexibility, and low cost. Examples of the polymer include polystyrene, polyethylene, polypropylene, polymethyl methacrylate, polytetrafluoroethylene, polystyrenesulfonic acid, polyacrylic acid, polymethacrylic acid, polyacrylonitrile, polyvinylpyridine, polyvinylalcohol, poly-p-aminostyrene, Nafion (trademark), etc. Among them, a polymer having dissociating group or non-ionic and metal-coordinating polymer is preferred from the viewpoint of the efficiency at the production of the device. Furthermore, the substrate is favorably insoluble in water and other solvents, and thus, desirably, has a crosslinked structure. Examples of the polymer having crosslinked structure includes a copolymer of a metal coordinating monomer such as styrenesulfonic acid, acrdylic acid, acrylonitrile, 4-vinylpyridine or p-aminostyrene with a crosslinking monomer such as divinylbenzene or methylenebisacrylamide, a polymer having reactive group at the side chain crosslinked with a crosslinkin

agent such as glutaraldehyde, cyanuric chloride or toluene-diisocyanate.

As the method for including the semiconductor into the substrate, so-called "casting method" is general, where a dispersion of semiconductor in the above-mentioned polymer solution is placed onto an appropriate plate and the solvent is evaporated. As another method, a metal sulfide is dispersed by in situ formation in the substrate as follows: The metal ion is adsorbed into the substrate and then the substrate is treated with a sulfurizing agent such as $H_2S$. The latter method is especially useful in the case of chalcogenide type of compound semiconductors.

The following shows the method for incorporating an electron donor or an electron acceptor into the resulting semiconductor-containing substrate: In case that the electron donor and/or the electron acceptor are the insoluble polymeric metal complexes such as PB, the method described for the preparation of the electrochemically reactive material of the present invention can be conveniently applicable. Favorably, the insoluble polymeric metal complex can be formed on the substrate by complexation of a complex cation represented by a general formula of $M_A^X(L_A^a)\ell$ with a complex anion represented by a general formula of $M_B^Y(L_B^b)_m(L_C^c)_n$, wherein each of $M_A^X$ and $M_B^Y$, $L_A^a$, $L_B^b$ $L_C^c$, a,b,c,X,Y,Z, $\ell$, m, or n is as defined above. Other methods including vacuum-evaporating method can be also used. In case that the electron donor or the electron acceptor is a low molecular weight compound, the compound may be included into the

semiconductor-containing substrate directly or after dissolving it in a solvent. In case that the electron donor or the electron acceptor has a reactive group such as carboxyl group, quarternary ammonium group, amino group or hydroxyl group and the semiconductor-containing substrate has a functional group capable to combine with the such reactive group directly or by the aid of a coupling reagent, the electron donor or acceptor can be immobilized to the substrate with chemical bonding. In case that the electron donor and/or the electron acceptor is a soluble polymer, the electron donor or the electron acceptor can be immobilized by coating a solution of the polymer on the semiconductor-containing substrate.

The device can be thus produced in a thin film of more than ca. 10 μm thickness.

In PECD, the assembly of electron donor, electron acceptor and semiconductor is important. Namely, electron donor and electron acceptor should be separated by semiconductor to carry out efficient transfer of electron and hole generated in semiconductor by light absorption to electron acceptor and electron donor, respectively. Therefore, the immobilization of electron donor and electron acceptor to different surfaces of substrate is required and, it is thus preferable that at least one of electron donor and electron acceptor should be a polymeric substance. Because of the durability and functionality, polymeric metal complex is preferred as the polymeric electron donor or acceptor.

The principle of PECD will be briefly explained below.

In case that the energy levels of the semiconductor

included in the substrate (thereaftere, denoted by S), the electron donor (thereaftere, denoted by D) and the electron acceptor (thereafter, denoted by A) are in the relationship as shown in Fig. 2 [Namely, the redox potential of D (1) is more negative than the potential of the valence band of S (2), the redox potential of A (4) is more positive than the potential of the conduction band of S (3), and the redox potential of D (1) is more positive than the redox potential of A (4)], a hole is generated at the valence band by irradiation of light to S and an electron is injected from D to the valence band of S, and at the same time, an excited electron at the conduction band of S transferred to A. As the result, D is oxidized and A is reduced by the action of photo-excitation of S. In the case that D and/or A are compounds capable to change in color by oxidation or reduction (electrochromic material, thereafter called EC material), the semiconductor-containing material can be used as PECD.

In using the material as PECD, it is important that D and A should not be in contact directly, if both D and A are reversible. Otherwise, a back electron transfer occurs between a reduction product of A ($A^-$) and an oxidation product of B ($B^+$), whereby no electrochromium is observed. In the present invention, the back electron transfer is avoided by using the polymeric metal complex as A and/or D. In case that monomeric A or D is used, it is favorable to immobilize them onto the substrate. The immobilization onto the substrate can be achieved using covalent bonding, ion bonding or hydrogen bonding. The immobilization of $A^-$ or

$D^+$ can be also possible by precipitation of them to the surface of the semiconductor, though this method is not so effective. On the other hand, when an irreversibly oxidizable compound (thereafter called sacrificial donor, denoted by Ds) is used as D, no back electron transfer occurs even if $D^+$ and $A^-$ are in contact each other. Examples of the sacrificial donor include organic acids such as tartaric acid, alcohols such as ethyl alcohol, amines such as triethanolamine, thiol compounds, tetrahydrofuran, etc. In this case, however, it is necessary to supply Ds for repeated use.

Among them, the use of the polynuclear metal complex as A and D is most favorable in view of the efficiency at production, economics, and functionality of the device. Thus, one example of the principle will be explained below, using PB as D and A.

As well-known, PB is a polynuclear metal complex of mixed valence state consisting of $Fe^{2+}$ and $Fe^{3+}$ crosslinked by crosslinking ligand, $CN^-$. PB can be oxidized and reduced as shown in equations (3) and (4):

(1) in case that PB is used as A

$$K^+Fe^{3+}Fe^{2+}(CN^-)_6 \underset{-e^-(-K^+)}{\overset{+e^-(+K^+)}{\rightleftarrows}} K_2^+Fe^{2+}Fe^{2+}(CN^-)_6 \quad \ldots(3)$$

(2) in case that PB is used as D

$$K^+Fe^{3+}Fe^{2+}(CN^-)_6 \underset{+e^-(+K^+)}{\overset{-e^-(-K^+)}{\rightleftarrows}} Fe^{3+}Fe^{3+}(CN^-)_6 \quad \ldots (4)$$

Therefore, a semiconductor-containing material overlaid with PB at the both side can work as PECD without other D or A. In that case, the color of PB changes from blue to colorless at the reduction side and from blue to green at the oxidation side according to the above equations (3) and (4). Thereby, a color change from blue to yellowish green with good contrast is observed in case that CdS and Nafion are employed as semiconductor and substrate, respectively. Otherwise, PECD displaying with good contrast can be obtained using PB as D and appropriate EC material as A.

The displaying can be deleted by placing the displaying material between two electrodes and applying a prescribed potential between the terminals so as to cause the reactions of $D^+ \longrightarrow D$ and $A^- \longrightarrow A$.

Fig. 1 shows a composition of solid secondary battery of the present invention, where the part (1) indicates the polymer complex membrane and the part (2) indicates the base electrode plate.

Fig. 2 shows a relationship of redox potentials of each component at PECD utilizing a semiconductor-containing material of the present inventioin. This figure also shows the principle of photo-displaying and recording. D. A, and S represent electron donor, electron acceptor, and semiconductor, respectively. (1), (2), (3) and (4) represent redox potential of D, valence band of S, conduction band of S, and redox potential of A, respectively.

Fig. 3 shows a visible absorption spectrum of the

solid electrochemically reactive material consisting of PB and Nafion.

Fig. 4 shows one example of the voltanogram of the electrochromic device composed from the material of the present ivnention.

Fig. 5 shows one example of response curves at coloring-decoloring processes of the electrochromic display device of the present invention.

Fig. 1 shows a composition of solid-state secondary battery consisting of the solid polymer electrolyte and the polynuclear metal complex with supporting electrodes. The polymer electrolyte containing the polynuclear metal complex (1) may be attached to the supporting electrodes (2) as follows: In case that the polymer electrolyte (1) is in membrane form, the supporting electrodes (2) can be formed by depositing electrochemically inactive metallic thin film such as gold, platinum, etc. onto the both side of the membrane, or the membrane (1) can be pressed between two plates of electrode base such as Nesa glasses, conducting polymer mebranes or metal plates, which are employed as supporting electrodes (2). In case that the polymer electrolyte (1) is in fiber form, a cloth form of secondary battery can be composed by mix-weaving the polymer electrolylte with a fiber having high electrical conductivity such as carbon fiber or metal fiber, which is employed as supporting electrode (2). In case that the polymer electrolyte is in particulate form, the particles can be combined with the supporting

electrodes by directly pressing between two supporting electrodes (2) such as Nesa glasses, metal plates, etc., or by attaching to the electrodes (2) after dispersing the particles method into a polymer matrix (Any kind of polymers may be employed according to melt-dispersing or solubilizing-dispersing. Favorable examples include polystyrene, polyacrylonitrile, polyester or other polymers having a good film formability, which contains a conducting fine powder such as metal powder, carbon powder, etc.

The resulting secondary battery may act according to the following mechanism: The polynuclear metal complex is oxidized to a higher valence state on anode at charging. At the same time, the polymer electrolyte and/or the polynuclear metal complex release a cation such as $K^+$, $Rb^+$, $Cs^+$ or $NH_4^+$, which is included in the above electrolyte or complex as a counter ion theretofore. On cathod, the polynuclear metal complex is reduced to a lower valence state trapping the cation released. Thus, the electrical neutrality is maintained by moving the cation in the polymer electrolyte as described above. At discharging, reverse oxidation-reduction reaction occurs and the cation moves back in the reverse direction.

In battery, a couple of redox agents at cathodic and anodic sites is required as an electroactive substance. In the present invention, there exists an advantage that only one kind of electroactive substance is used to compose battery, because the polynuclear metal complex of the present

invention has different three valence states. Moreover, the battery of the present invention enables to simplify the processing of battery manufacturing, as the electroactive substances are fixed in solid polymer electrolyte. On the other hand, conventional battery should be composed by successive overlaying at least three components of anode active substance, cathode active substance, and electrolyte. As a result, the secondary battery of the present invention has many merits as shown below: (1) It can be produced conveniently and at low cost: (2) It is possible to make a thin film battery of light-weight and compact body. (3) It can be also produced as a flexible battery. (4) There is no leakage of electrolyte. (5) The degree of charging or discharging can be judged by eye, because charging and discharging accompany color change of the electroactive substance.

The production of a solid-state thin-film display device is one of the important targets in this field. Vacuum evaporation technology has been utilized as a major method of the production of the said device. The present invention provides a novel thin-film technology of a high cost-performance compared with the conventional method and has following characteristics:

(1) It is possible to make a multi-layered thin material composed of a solid polymer electrolyte and an EC agent in extreme convenience and economy by means of novel wet process called "surface complexation".

(2) A total device can be made in flexible thin film and

thus it is possible to construct a curved picture element which is heretofore difficult to be made.

(3) Leak of any liquid and detereioration of connecting parts do not occur.

(4) Display device of large surface area can be easily produced. Thus, it is applicable to a large flat panel display.

The PECD utilizing the material of the present invention does not require a base electrode and thus, increases the freedom of displaying. For example, it is possible to display any figure at any position on electrode only by irradiating light. In addition, the PECD can also be used as an erasable type of photo-recording device.

Now, the present invention will be described in detail with reference to Examples. However, it should be understood that the present invention is by no means limited to these specific Examples.

EXAMPLE 1

Nafion 117 (produced at Du Pont, membrane thickness: ca. 100 μm, surface area: 4 $cm^2$) was dipped into aqueous $FeCl_2$ solution (50 mM) for ca. 1 hour. After the membrane was washed, the membrane was dipped into aqueous $K_3[Fe(CN)_6]$ solution (50 mM) for about 20 hours. The membrane was gradually colored blue when it was dipped into latter solution. The visible absorption spectrum was shown in Fig. 3. Unreacted $Fe^{2+}$ ion was removed by dipping the membrane into aqueous KCl solution (ca. 1.0 M) whereby the $Fe^{2+}$ ion was replaced with $K^+$ ion. Thus obtained Nafion membrane

containing the complex formed from $Fe^{2+}$ and $[Fe(CN^-)_6]^{3-}$ was pressed between two ITO coated glass electrode plates (produced by Matsuzaki Shinkuu Co., Ltd., surface resistance: ca. 10 Ω/□) and cyclic voltanogram was obtained using each ITO as working electrode and counter electrode without reference electrode. The voltage-current curve indicates that the resulting complex has three oxidation-reduction states like that Prussian blue does. After charging by applying a bias of 1.0 V between two terminals with passage of 0.05 coulomb, open circuit voltage (Voc) and short circuit current (Jsc) were measured. The results are shown in Table 1.

EXAMPLES 2 - 7

Nafion 117 (produced at Du Pont, membrane thickness: ca. 100 µm, surface area: 4 $cm^2$) or Flemion (produced at Asahi Glass Co., membrane thickness: ca. 200 µm, surface are: 4 $cm^2$) was dipped into an aqueous solution containing transition metal ion having X-valent ($M_A{}^X$) and then complex salt $K_n[M_B{}^Y(CN^-)_5L_C{}^c]$ (n=2-5), successively and then washed with aqueous KCl solution (ca. 1.0 M) in a similar manner as described in Example 1. A battery shown in Fig. 1 was constructed by pressing thus obtained membrane between two ITO coated glass electrode plates. After charging by applying a voltage of 1.0 V between above two terminals with a passage of 0.05 coulomb, open circuit voltage (Voc) and short circuit current (Jsc) were measured. The results are summarized in Table 1.

EXAMPLE 8

Soluble Nafion (oligomer of Nafion 117, 5 wt% water-alcohol solution) (20 µl) was coated on a sheet (surface area: 2 $cm^2$) of polytetrafluoroethylene porous membrane Fluoropore (trademark: Sumitomo Electric Co., Ltd., pore size: 1.0 µm, membrane thickness: 100 µm) and dried in vacuum after predrying at 40°C under atmospheric pressure. Thus obtained composite polymer electrolyte membrane was dipped into 10 mM aqueous $FeCl_2$ solutoin for ca. 1 hour in a stream of argon, washed with water, and then dipped into 0.5 mM aqueous $K_3[Fe(CN)_6]$ solution for ca. 15 hours in a stream of argon. As precipitation of the polynuclear metal complex is going on the membrane, the membrane was homogeneously blue-colored which is characteristic of Prussian blue. The blue membrane was dipped into 1 M aqueous KCl solution for several hours to remove unreacted $Fe^{2+}$ ion by exchanging the $Fe^{2+}$ ion with $K^+$ ion.

Thus prepared polymer complex membrane was pressed between two transparent ITO electrodes (indium-tin oxide-coated glass: Matsuzaki Shinkuu Co., Ltd., surface resistance: ca. 10Ω/□). Voltanogram was obtained using one of the above two electrodes as working electrode and another as counter electrode without reference electrode. Fig. 4 shows a voltage-current curve obtained at sweep rate of 10 mV/s. This figure indicates that the above-described blue complex has different oxidation-reduction states. The shape of voltage-current curve changed to some extent with the voltage-sweep rate. Furthermore, this shape also shows that peaks appear symmetrically at positive voltage and negative voltage centered at 0 V, which reflexts electrochemical symmetry of

the electroactive substances, i.e., the polymeric metal complexes at anodic and cathodic sides. Color of the membrane reversibly changed with oxidation and reduction of the polymeric metal complex. Namely, color of the membrane changed from blue to yellowish green at anodic side of the membrane and from blue to white at cathodic side (decoloring process). When both terminals were short-circuited, both faces of the membrane turned to original blue color (coloring process). The response time is ca. 0.5 seconds at the coloring and decoloring processes based on the half life time of the current decay, as shown in Fig. 5. The picture color almost completely changed within 2 - 3 seconds by naked eye observation.

EXAMPLE 9

The soluble Nafion used in Example 8 (30 µl) was coated onto a sheet (surface area 2 $cm^2$) polyethylene porous membrane Hypore 300 (trademark: Asahi Chemical Industry Co., Ltd., pore size 0.5 µm, membrane thickness 50 µm) and dried in vacuum at 40°C overnight after air-drying at room temperature. Thus obtained composite polymer electrolyte membrane was dipped into 20 mM aqueous $FeCl_2$ solution for ca. 1 hour in a stream of argon, washed with water, and then dipped into 10 mM aqueous $K_2[Fe(CN)_5 \cdot CO]$ solution for ca. 15 hours in a stream of argon. The obtained blue membrane was dipped into 1 M aqueous KCl solution for several hours to remove unreacted $Fe^{2+}$ ion.

The characteristics of the resulting polymeric metal complex almost the same as described in Example 8 concerning

the change of color tone, response time, stability at repeating, etc.

EXAMPLE 10

A casting solution ( 6 wt% of polymer concentration) was prepared by dissolving sodium polystyrenesulfonate (PSSNa, molecular weight 20,000) and polyvinylalcohol (PVA, molecular weight 22,000)(PVA/PSSNa=3/2 in weight ratio) in a mixed solvent of ethanol/water (1/1 in volume ratio). To this solution (40 µl) was added 40 µl of an ethanol/water solution of 10% glutaraldehyde (ethanol/water=1/1 in volume ratio). The resulting solution was coated onto a sheet (surface area: 4 $cm^2$) of polyethylene porous membrane Hypore and heated at 60°C for several hours covering the both sides with Teflon (trademark) membrane.

Then, the polynuclear metal complex comprising $Fe^{2+}$ and $Fe(CN)_6^{3-}$ was included to thus obtained polymer electrolyte membrane in a similar manner as described in Example 8. The resulting polymeric complex membrane was pressed between two ITO electrodes. The electrochromic characteristics of the device were almost the same as described in Example 8.

EXAMPLE 11

A casting solution (10 wt% of polymer concentration) was prepared by dissolving sodium polystyrenesulfonate (PSSNa, molecular weight 20,000) and polyvinylalcohol (PVA, molecular weight 22,000) (PVA/PSSNa=3/2 in weight ratio) in a mixed solvent of ethanol/water (1/1 in volume

ratio). Titanium white was added to the solution in an amount of 1 wt% and then homogeneously dispersed by ultrasonic irradiation for several ten minutes. Thus obtained dispersion was placed on Teflon plate and heated at 30°C for 3 hours and then at 120°C for 2 hours. Thereafter, formed membrane was peeled off by dipping the plate into water.

Then, the polynuclear metal complex comprising $Fe^{2+}$ and $Fe(CN)_6^{3-}$ was included to thus obtained complex polymer electrolyte membrane in a similar manner as described in Example 8. The resulting polymeric complex membrane was pressed between two ITO electrodes. The electrochromic characteristics of the device were almost the same as described in Example 8.

EXAMPLE 12

In 7.2 g of dimethylformamide were dissolved 2 g of t-butylacrylamidesulfonic acid (TBAS, Nitto Chemical Co., Ltd.), 0.3 g of N,N-bis-methyleneacrylamide and 0.15 g of α,α'-azobisisobutyronitrile. The solution (100 µl) was coated onto polyethylene porous membrane Hypore 300. Polymerization was carried out by heating the resulting membrane at 50°C for 30 hours covering the both sides with Teflon membrane.

Then, the polynuclear metal complex comprising $Fe^{2+}$ and $Fe(CN)_6^{3-}$ was included to thus obtained complex polymer electrolyte membrane in a similar manner as described in Example 9. The resulting polymeric complex membrane was pressed between two ITO electrodes. The electrochromic characteristics of the device were almost the same as

described in Example 8,

EXAMPLE 13

A casting solution (5 wt% of polymer concentration) was prepared by dissolving sodium polystyrenesulfonate (PSSNa. molecular weight 20,000) and copolymer of acrylonitril-styrnee (PASt. styrene content in the copolymer: 44 mole%) (PSSNa/PASt=1/1 in weight ratio) in dimethylsulfoxide. The resulting solution (60 μl) was coated onto a sheet (surface area 2 $cm^2$) of polyethylene porous membrane Hypore and dried at 50°C for one day.

Then, the polynuclear metal complex comprising $Fe^{2+}$ and $Fe(CN)_6^{3-}$ was included to thus obtained complex polymer electrolyte membrane in a similar manner as described in Example 8. The resulting polymeric complex membrane was pressed between two ITO electrodes. The electrochromic characteristics of the device were almost the same as described in Example 8.

EXAMPLE 14

Nafion membrane (Nafion 117 produced at Du Pont) was dipped into 50 mM aqueous cadmium acetate solution for 3 hours, washed with water, and then dipped into hydrogen sulfide-saturated water for 10 hours. Transparent Nafion membrane was colored to yellow and the precipitation of fine particles in the membrane was observed by naked eyes. Then, the membrane was dipped into 10 mM aqueous ferrous chloride solution for 2 hours in a stream of argon, waShed with water sufficiently, and dipped into 10 mM aqueous potassium ferricyanide solution for 1 minute in a stream of argon. At this

stage, the yellow cadmium sulfide-dispersed membrane changed to yellowish green due to precipitation of Prussian blue on the surface of the membrane. Thus obtained membrane was pressed between two glass plates. The membrane was irradiated by 300 W tungsten lamp with light intensity of ca. 90 $W/cm^2$ at the membrane surface. The increase of temperature of the membrane was prevented by placing a water-bath of 5 cm thickness between light source and the glass plate by which the membrane was fixed. The color of the membrane gradually changed from yellowish green to pale yellow with irradiation of light. After ca. 5 minutes, the color of the all surface of the membrane changed to pale yellow. The color turned to original eyllowish green by applying a potential of 1.3 V to the membrane. This change of color tone could be observed repeatedly.

EXAMPLE 15

The Nafion membrane containing fine particles of cadmium sulfide prepared in a similar manner as described in Example 14 was dipped into 50 mM aqueous ferrous chloride solution for 2 hours in a stream of argon, washed with water sufficiently, and dipped into 50 mM aquoues potassium ferricyanide solution for 1 minute in a stream of argon, whereby Prussian blue precipitated on the surface of the membrane and the color of the membrane changed from yellow to yellowish green. Thus obtained membrane was dipped into methyl alcohol for 10 minutes in order to include methanol as sacrificial electron donor into the membrane and then pressed between two glass plates. The membrane was irradiated by

300 W tungsten lamp with light intensity of ca. 75 $W/cm^2$ at the membrane surface. The increase of temperature of the membrane was prevented by placing a water-bath of 5 cm thickness between light source and the membrane. The color of the membrane gradually changed from yellowish green to yellow with irradiation of light. After ca. 1 minute, the color of the all surface of the membrane changed to yellow. The color turned to original yellowish green by removing the two glass plates and allowing to contact the membrane with air. This change of color tone could be observed repeatedly.

EXAMPLE 16

The cadmium sulfide-dispersed membrane overlaid with Prussian blue prepared in a similar manner as described in Example 14 was dipped into a mixed solution of triethanolamine/water (1/9 in volume ratio) controlled at pH 2.8 for 10 minutes in order to include triethanolamine as sacrificial electron donor into the membrane. Then, the membrane was pressed with two glass plates and irradiated by 300 W tungsten lamp with light strength of ca. 75 $W/cm^2$ at the membrane surface. The increase of temperature of the membrane was prevented by placing a water-bath of 5 cm thickness between light source and the membrane. The color of the membrane gradually changed from yellowish green to yellow with irradiation of light. After ca. 3 minutes, the color of the all surface of the membrane changed to yellow. The color turned to original yellowish green by removing the two glass plates and allowing to contact the membrane with air. This change of color tone could be observed repeatedly.

EXAMPLE 17

The cadmium sulfide-dispersed membrane overlaid with Prussian blue prepared in a similar manner as described in Example 14 was dipped into a mixed solution of 50 mM aqueous tartaric acid solution controlled at pH 2.1 for 30 minutes in order to include tartaric acid as sacrificial electron donor into the membrane. Then, the membrane was pressed with two glass plates and irradiated by 300 W tungsten lamp with light intensity of ca. 75 $W/cm^2$ at the membrane surface as described in Example 15. The increase of temperature of the membrane was prevented by placing a water-bath of 5 cm thickness between light source and the membrane. The color or the membrane gradually changed from yellowish green to yellow with irradiation of light. After ca. 3 minutes, the color of the all surface of the membrane changed to yellow. The color turned to original yellowish green by removing the two glass plates and allowing to contact the membrane with air. This change of color tone could be observed repeatedly.

EXAMPLE 18

A homogeneous casting solution (13 wt% of polymer concentration) was prepared by dissolving polyacrylonitrile (produced by Aldrich Co., number average molecular weight: 33,000) into dimethylformamide. The solution was placed onto a glass plate and immediately dipped into water of 10°C to coagulate, whereby a porous membrane of 150 μm was obtained. Then, the membrane was fixed at the center of a two chamber cell. Ca. 10 ml of 15 mM aqueous cadmium

acetate solution was placed at one side of the cell and the same amount of ion exchanged and distilled water at another side to which hydrogen sulfide was introduced with bubbling. After 30 minutes, the porous membrane was colored to yellow and the precipitation of fine particles in the membrane was observed by naked eyes. Then, soluble Nafion (trademark: Du Pont, 5 wt% water-alcohol solution) was coated on the cadmium sulfide-precipitated part of the membrane and dried at 40°C for 1 hour. Thus obtained cadmium sulfide-dispersed porous membrane was dipped into 10 mM aqueous ferrous chloride solution for 2 hours in a stream of argon, washed with water sufficiently, and dipped into 10 mM aqueous potassium ferricyanide solution for 1 minute in a stream of argon, whereby the color of the membrane changed from yellow to yellowish green with the precipitation of Prussian blue on the surface of the membrane. Thus obtained membrane was dipped into methyl alcohol for 10 minutes and the pressed between two glass plates. The membrane was irradiated in a similar manner as described in Example 15. The color of themembrane gradually changed from yellowish green to yellow with irradiation of light. After ca. 10 minutes, the color of the all surface of the membrane changed to yellow. The color turned to original yellowish green by removing the two glass plates and allowing to contact the membrane with air. This change of color tone could be observed repeatedly.

EXAMPLE 19

The cadmium sulfide-dispersed membrane overlaid with

Prussian blue prepared in a similar manner as described in Example 14 was dipped into a 50 mM aqueous hydroquinone solution (pH 6.3) for 30 minutes in a stream of argon in order to include reversible electron donor into, the membrane. The membrane was pressed between two glass plates and irradiated in a similar manner as described in Example 15. The color of the membrane gradually changed from yellowish green to pale yellow with irradiation of light. After ca. 10 minutes, the color of the all surface of the membrane changed to pale yellow. The color turned to original yellowish green by applying a voltage of 1.3 V to the membrane. This change of color tone could be observed repeatedly.

Table 1 Characteristics of the secondary battery utilizing cation exchange membrane containing metal complex composed by X-valent transition metal ion ($M_A^X$) and complex ion containing Y-valent transition metal $[M_B^Y(CN)_5L_C^c]$

| Example | Cation exchange membrane | $M_A^X$ | $M_D^Y$ | $L^Z$ | Visible adsorption spectra λ max (nm) | Color tone | Voc (V) | Jsc (μA/cm²) |
|---|---|---|---|---|---|---|---|---|
| 1 | Nafion | $Fe^{2+}$ | $Fe^{3+}$ | $CN^-$ | 700 | blue | 0.66 | 66.0 |
| 2 | Flemion | $Fe^{2+}$ | $Fe^{3+}$ | $CN^-$ | 700 | blue | 0.55 | 50.0 |
| 3 | Nafion | $Co^{2+}$ | $Fe^{3+}$ | $CN^-$ | 500 | purple | 0.32 | 13.0 |
| 4 | Nafion | $Fe^{2+}$ | $Co^{3+}$ | $CN^-$ | - | yellow | 0.48 | 24.0 |
| 5 | Nafion | $Fe^{2+}$ | $Ru^{2+}$ | $CN^-$ | 500 | purple | 0.45 | 48.0 |
| 6 | Nafion | $Fe^{2+}$ | $Fe^{3+}$ | CO | 700 | blue | 0.50 | 40.0 |
| 7 | Nafion | $Fe^{2+}$ | $Fe^{3+}$ | $NH_3$ | 750 | blue | 0.40 | 33.0 |

We claim:

1. A solid electrochemically reactive material containing a polynuclear metal complex formed from a complex cation represented by a general formula of $M_A^X(L_A^a)_\ell$ and a complex anion represented by a general formula of $M_B^Y(L_B^b)_m(L_C^c)_n$, wherein each of $M_A^X$ and $M_B^Y$ is a transition metal ion of X-valence and Y-valence, respectively, and $L_A^a$ represents a ligand having a neutral or a-valent positive charge, while each of $L_B^b$ and $L_C^c$ represents a ligand having b-valent negative charge and neutral or c-valent negative charge, respectively. Each of X, Y and m is a positive integer, each of a, $\ell$ and n is a positive integer including zero, b is a negative integer, and c is a negative integer including zero.

2. The solid electrochemically reactive material of claim 1 where $\ell$ is zero and the complex anion is the one represented by a general formula $M_B^Y(CN^-)_5L_C^c$, wherein $L_C^c$ represents a ligand having neutral or c-valent negative charge while c is a negative integer including zero.

3. A secondary battery comprises a solid electrochemically reactive material containing a polynuclear metal complex formed from a complex cation represented by a general formula $M_A^X(L_A^a)_\ell$ and a complex anion represented by a general formula of $M_B^Y(L_B^b)_m(L_C^c)_n$, and supporting electrodes which are located in counter position across the material, wherein each of $M_A^X$ and $M_B^Y$ is a transition metal ion of

X-valence and Y-valence, respectively, and $L_A^a$ represents a ligand having neutral or a-valent positive charge, and each of $L_B^b$ and $L_C^c$ represents a ligand having b-valent negative chage and neutral or c-valent negative charge, respectively, each of X, Y and m is a positive integer, a, $\ell$ and n is a positive integer including zero, b is a negative integer and c is a negative integer including zero.

4. The secondary battery of claim 3 wherein $\ell$ is 0 and the complex anion is the one represented by a general formula $M_B^Y(CN^-)_5L_C^c$, wherein $L_C^c$ represents a ligand having neutral or c-valent negative charge while c is a negative integer including zero.

5. An electrochromic display device comprises a solid electrochemically reactive material containing a polynuclear metal complex formed from a complex cation represented by a general formaul of $M_A^X(L_A^a)\ell$ and a complex anion represented by a general formula of $M_B^Y(L_B^b)_m(L_C^c)_n$, an opaque backing material which is incorporated into the electrochemically reactive material, and supporting electrodes which are located in counter position across the material, wherein each of $M_A^X$ and $M_B^Y$ is a transition metal ion of X-valence and Y-valence, respectively, and $L_A^a$ represents a ligand having neutral or a-valent positive charge, and each of $L_B^b$ and $L_C^c$ represents a ligand having b-valent negative charge and neutral or c-valent negative charge, respectively, each of X, Y and m is a positive integer, a, , and n is a positive integer including zero, b is a negative

integer, and c is a negative integer including zero.

6. The electrochromic display device of claim 5 wherein $\ell$ is zero and the complex anion is the one represented by a general formula $M_B^Y(CN^-)_5L_C^c$, wherein $L_C^c$ represents a ligand having neutral or c-valent negative charge while c is a negative integer including zero.

7. A semiconductor-containing electrochemically reactive material consisting of a semiconductor, and electron donor and an electron acceptor, where at least one of the electron donor and the electron acceptor is a polynuclear metal complex formed from a complex cation represented by a general formula of $M_A^X(L_A^a)\ell$ and a complex anion represented by a general formula of $M_B^Y(L_B^b)_m(L_C^c)_n$, wherein each of $M_A^X$ and $M_B^Y$ is a transition metal ion of X-valence and Y-valence, respectively, and $L_A^a$ represents a ligand having neutral or a-valent positive charge, and each of $L_B^b$ and $L_C^c$ represents a ligand having b-valent negative charge and neutral or c-valent negative charge, respectively, each of X, Y and m is a positive integer, a, $\ell$ and n is a positive integer including zero, b is a negative integer, and c is a negative integer including zero.

8. The semiconductor-containing material of claim 7 where $\ell$ is zero and the complex anion is the one represented by a general formula $M_B^Y(CN^-)_5L_C^c$, wherein $L_C^c$ represents a ligand havingneutral or c-valent negative charge while c is a negative integer including zero.

0197465

1/2

FIG.1

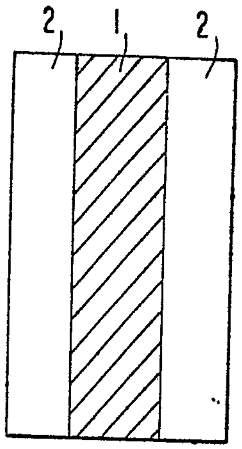


FIG.3

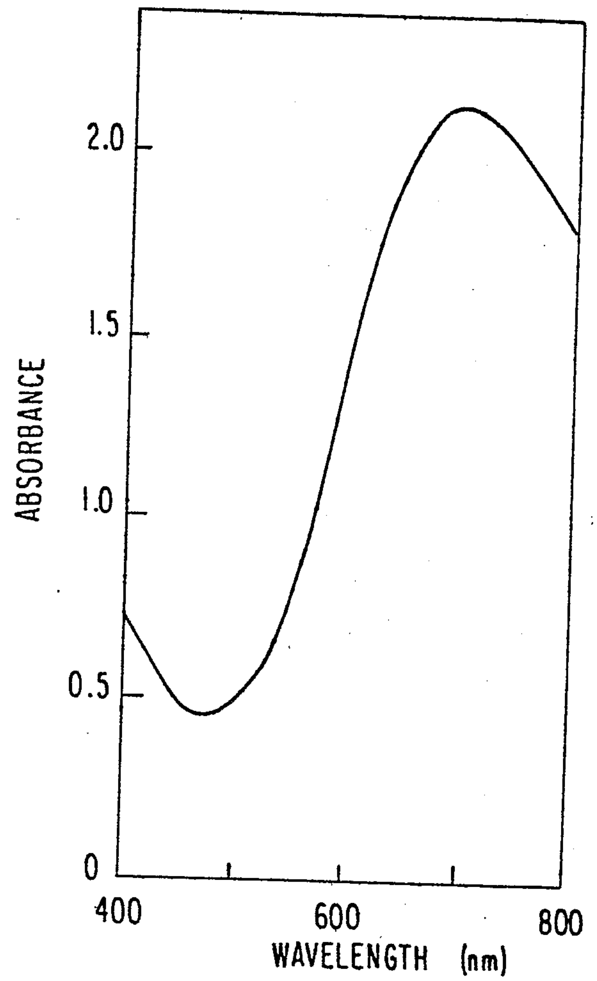


FIG.2

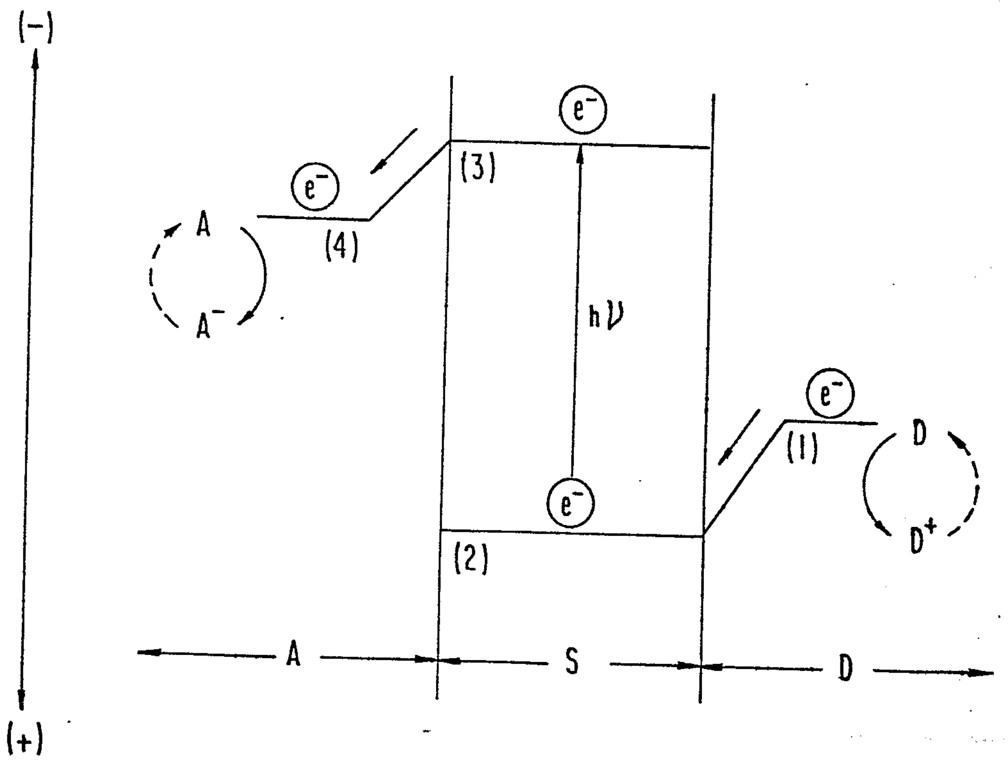

FIG.4

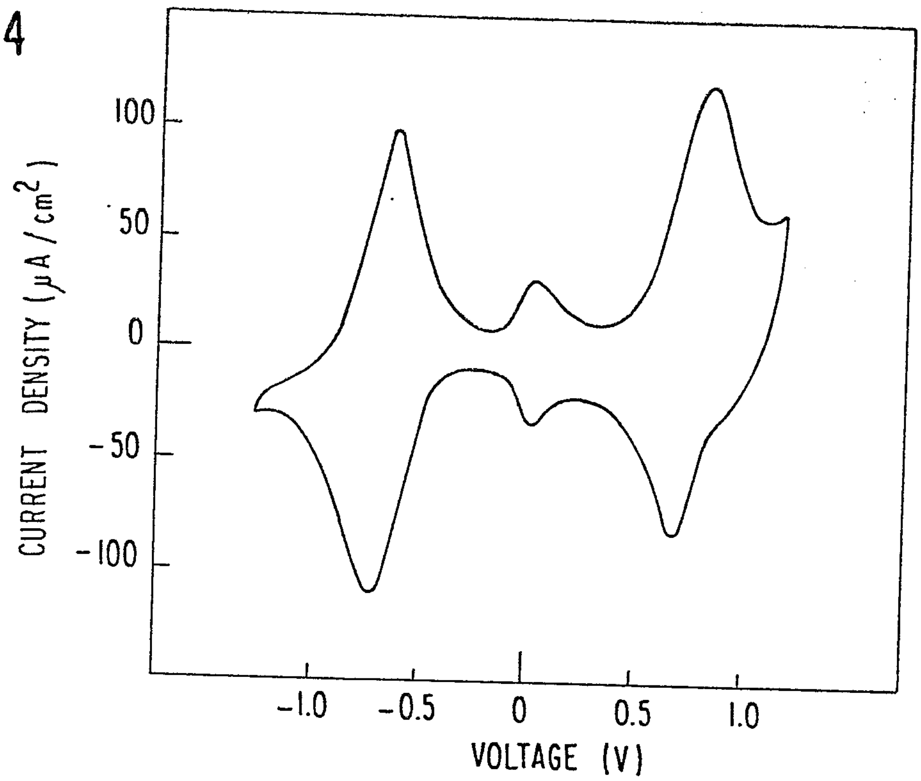
100
50
0
-50
-100
CURRENT DENSITY (μA/cm²)
-1.0
-0.5
0
0.5
1.0
VOLTAGE (V)

FIG.5

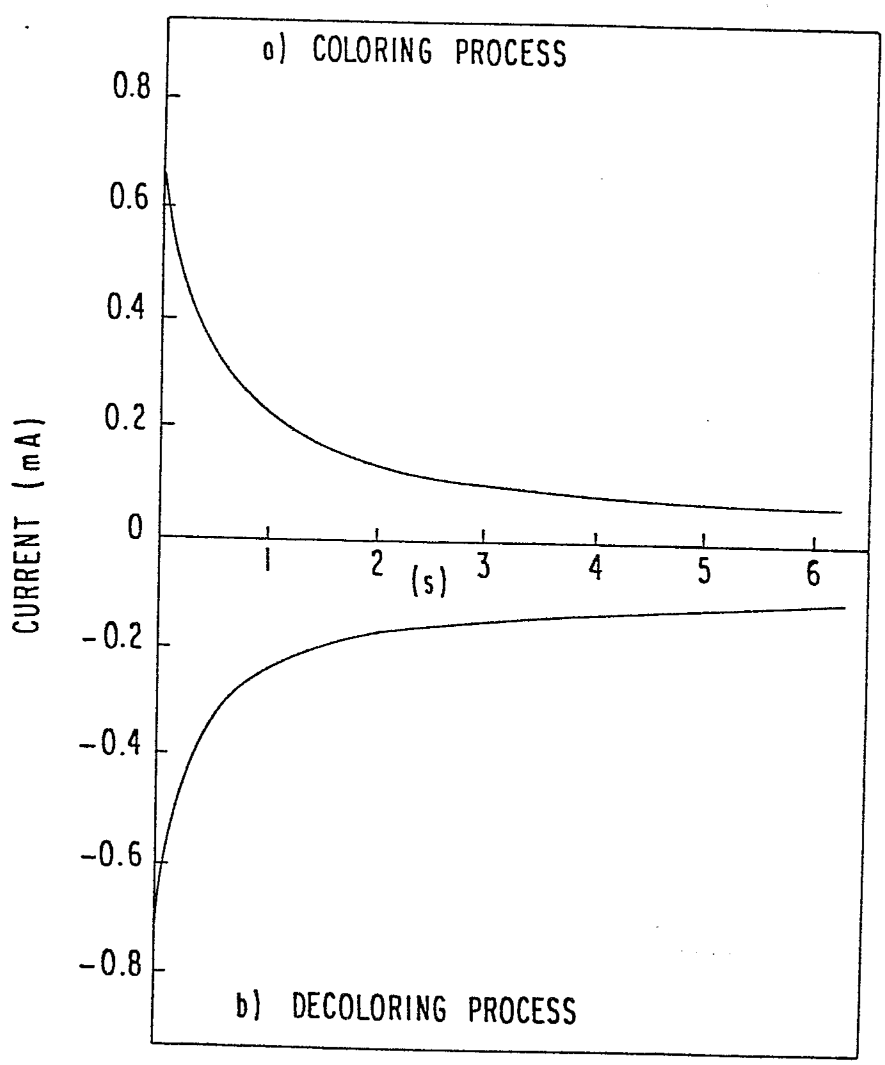
a) COLORING PROCESS
0.8
0.6
0.4
0.2
0
-0.2
-0.4
-0.6
-0.8
CURRENT (mA)
1
2
3
4
5
6
(s)
b) DECOLORING PROCESS